Europäisches Patentamt

European Patent Office

Office européen des brevets

(11) Veröffentlichungsnummer: **0 339 368 B1**

(12) **EUROPÄISCHE PATENTSCHRIFT**

(45) Veröffentlichungstag der Patentschrift: **22.06.94**

(21) Anmeldenummer: **89106484.2**

(22) Anmeldetag: **12.04.89**

(51) Int. Cl.⁵: **G11B  11/10**

(54) **Informationsaufzeichnungselement.**

(30) Priorität: **20.04.88 DE 3813171**

(43) Veröffentlichungstag der Anmeldung:
**02.11.89 Patentblatt  89/44**

(45) Bekanntmachung des Hinweises auf die
Patenterteilung:
**22.06.94 Patentblatt  94/25**

(84) Benannte Vertragsstaaten:
**DE FR GB**

(56) Entgegenhaltungen:
**DE-A- 3 705 237**
**US-A- 4 686 543**

(73) Patentinhaber: **HOECHST AKTIENGESELL-
SCHAFT**

**D-65926 Frankfurt(DE)**

(72) Erfinder: **Schäfer, Eckhard, Dr.
Zum Pfarrhag 2
D-6238 Hofheim(DE)**

**Beschreibung**

Die Erfindung betrifft ein Informationsaufzeichnungselement aus zumindest einem Substrat, auf dem eine magnetooptische Aufzeichnungsschicht aufgebracht ist, die beidseitig von dielektrischen Schichten umschlossen ist.

Magnetooptische Platten weisen im allgemeinen eine vollflächig verklebte Struktur auf, mit bzw. ohne zusätzliche Lackschicht zwischen Klebstoff und Informationsaufzeichnungsschicht.

Magnetooptische Platten können beispielsweise auch eine Luft-Sandwich-Struktur aufweisen, bei der ein Luftspalt zwischen der auf einem Substrat aufgebrachten Aufzeichnungsschicht und einer äußeren Abdeckschicht besteht, wobei die Aufzeichnungsschicht als solche noch zusätzlich von dielektrischen Schichten beidseitig umschlossen sein kann. Bei sogenannten doppelseitigen Informationsaufzeichnungsmedien bzw. -elementen werden jeweils zwei Substrate, von denen jedes eine Aufzeichnungsschicht trägt, so zusammengefügt, daß sich die Aufzeichnungsschichten im Abstand gegenüberliegen, wobei am inneren und äußeren Umfang dieser Elemente jeweils Abstandshalter vorgesehen sind. Derartige optische Informationsaufzeichnungselemente sind beispielsweise in der EP-A1 - 0 235 812 beschrieben.

Aus der DE-OS 37 05 237 A1 ist ein magnetooptisches Informationsaufzeichnungsmedium mit zwei Aufzeichnungselementen bekannt, die jeweils einen Träger und eine auf einem Teil einer Oberfläche des Trägers angeordnete magnetooptische Aufzeichnungsschicht umfassen, wobei die beiden Aufzeichnungselemente mit einander gegenüberliegenden beschichteten Seiten aneinander haften, mittels eines Klebstoffes, der keine Korrosion der Aufzeichnungsschichten hervorruft und der auf einem Teil der Oberfläche aufgebracht ist, auf der sich eine magnetooptische Aufzeichnungsschicht befindet. Auf dem anderen Teil der Oberfläche, auf dem sich keine Aufzeichnungsschicht befindet, ist ein schnellhärtender Klebstoff aufgebracht. Bei dem keine Korrosion hervorrufenden Klebstoff handelt es sich um einen durch Feuchtigkeit härtenden Polyurethanklebstoff vom Einkomponenten-Flüssigkeits-Typ. Der schnell härtende Klebstoff wird aus der Gruppe ausgewählt, die aus durch Ultraviolett-Strahlung härtenden Klebstoffen, Klebstoffen vom Cyanoacrylat-Typ und Klebstoffen vom reaktionsfähigen Acrylat-Typ besteht.

Sowohl von den Kosten als auch insbesondere in bezug auf die geometrische Stabilität von Informationsaufzeichnungselementen in Gestalt von Platten ist es von Vorteil, anstelle von Luft-Sandwich-Strukturen, die Platten so auszugestalten, daß von Abstandshaltern zwischen den einzelnen Schichten des Plattenverbunds abgesehen wird und stattdessen die Oberflächen der benachbarten Schichten unmittelbar miteinander vollflächig verbunden werden. Dabei zeigt sich, wenn die Verklebung der Schichten untereinander durch Auftragen von aushärtenden Klebstoffen erfolgt, daß die erforderliche Schreibleistung des Schreiblasers zum Aufzeichnen der Information stark angehoben werden muß, beispielsweise von etwa 5,2 mW auf 8 mW und mehr. Für die Praxis bedeutet dies, daß ein derartiges Informationsaufzeichnungselement als Speicherplatte wenig geeignet ist, da die herkömmlichen Schreiblaser für magnetooptische Speicherplatten im allgemeinen im Bereich zwischen 5 und 7 mW Schreibleistung arbeiten und diese Leistung für die Datenaufzeichnung völlig ausreicht.

Untersuchungen an flüssigen Klebstoffen zum Verkleben der Schichten einer magnetooptischen Speicherplatte zeigen, daß im allgemeinen eine etwa 43 % höhere Einschreibleistung des Schreiblasers, verglichen mit einer unverklebten Platte, erforderlich ist.

Aufgabe der Erfindung ist es, ein Informationsaufzeichnungselement, wie zum Beispiel eine magnetooptische Platte, bei der aneinander anliegende Schichten miteinander verbunden sind, so zu verbessern, daß die zum Einschreiben der Daten erforderliche Schreibleistung eines Schreiblasers gegenüber der Schreibleistung bei der Aufzeichnung auf einer magnetooptischen Platte, deren Schichten durch Flüssigklebstoffe miteinander verklebt sind, stark herabgesetzt ist.

Diese Aufgabe wird erfindungsgemäß bei einem Informamationsaufzeichnungselement der eingangs beschriebenen Art dadurch gelöst, daß der Verbund aus Substrat - dielektrischer Schicht - Aufzeichnungsschicht - dielektrischer Schicht mittels einer vollflächig aufgetragenen elastischen Klebeschaumschicht, die eine Temperaturbeständigkeit von -40°C bis +150°C besitzt und gegen Weichmacher sowie Lösungmittel beständig ist, hermetisch mit einer Kunststoffschicht verklebt ist.

In Ausgestaltung der Erfindung sind zwei Substrate vorhanden, auf denen jeweils eine magnetooptische Aufzeichnungsschicht, beidseitig von dielektrischen Schichten umschlossen, aufgebracht ist, und sind die beiden einander gegenüberliegenden Verbunde aus Substrat - dielektrischer Schicht - Aufzeichnungsschicht - dielektrischer Schicht durch eine elastische Klebeschaumschicht vollflächig miteinander, unter Ausschluß von Luftspalten, hermetisch verklebt.

In einer weiteren Ausgestaltung der Erfindung ist zwischen den beiden, einander gegenüberliegenden Verbunden aus Substrat - dielektrischer Schicht - Aufzeichnungsschicht - dielektrischer Schicht eine Trägerschicht angeordnet und ist jeder Verbund mittels einer elastischen Klebeschaumschicht vollflächig, unter Ausschluß von Luftspalten, hermetisch mit der Trägerschicht verklebt.

In Weiterbildung der Erfindung ist der Wärmeeindringkoeffizient der Klebeschaumschicht kleiner als der Wärmeeindringkoeffizient von schnellhärtenden Klebstoffen und durch Feuchtigkeitsaufnahme härtenden Polyurethanklebstoffen und beträgt weniger als 450 $Ws^{1/2}/Km^2$. Zweckmäßigerweise besteht die Klebeschaumschicht aus einem geschlossenzelligen Klebstoff-Kern mit selbstklebenden Oberflächen. Der Klebstoff-Kern enthält dabei einen Acrylat-Copolymer-Klebstoff.

Mit der Erfindung werden die Vorteile erzielt, daß die Verbunde aus Substrat - dielektrischer Schicht - Aufzeichnungsschicht - dielektrischer Schicht, bzw. ein derartiger Verbund mit einer Abdeckschicht, zuverlässig verklebt werden können, ohne daß die Schreibempfindlichkeit der magnetooptischen Aufzeichnungsschichten unzulässig stark verringert wird. Durch das Verkleben der Verbunde mit einer elastischen Klebschaumschicht, die einen geringeren Wärmeeindringkoeffizienten als dichte Klebstoffschichten besitzt, bleibt die Klebeverbindung dauerelastisch und erzeugt auch keine zusätzlichen Spannungen, wie sie bei reaktiv härtenden Klebstoffen leicht auftreten können. Die Klebschaumschicht läßt sich bei Raumtemperaturen ohne Schwierigkeiten auf die miteinander zu verklebenden Schichten des Informationsaufzeichnungselements aufbringen.

Die Erfindung wird im folgenden anhand von zeichnerisch dargestellten Ausführungsbeispielen näher erläutert. Es zeigen:

Fig. 1 schematisch im Schnitt eine erste Ausführungsform eines Informationsaufzeichnungselements nach der Erfindung,

Fig. 2 eine zweite Ausführungsform der Erfindung im Schnitt,

Fig. 3 eine dritte Ausführungsform der Erfindung im Schnitt,

Fig. 4 bis 5 sogenannte Empfindlichkeitskurven der rechne-risch ausgewerteten Lesesignale, die von einem auf zwei magnetooptische Platten nach der Erfindung und einer Vergleichsplatte aufgezeichneten symmetrischen Rechtecksignal erhalten werden.

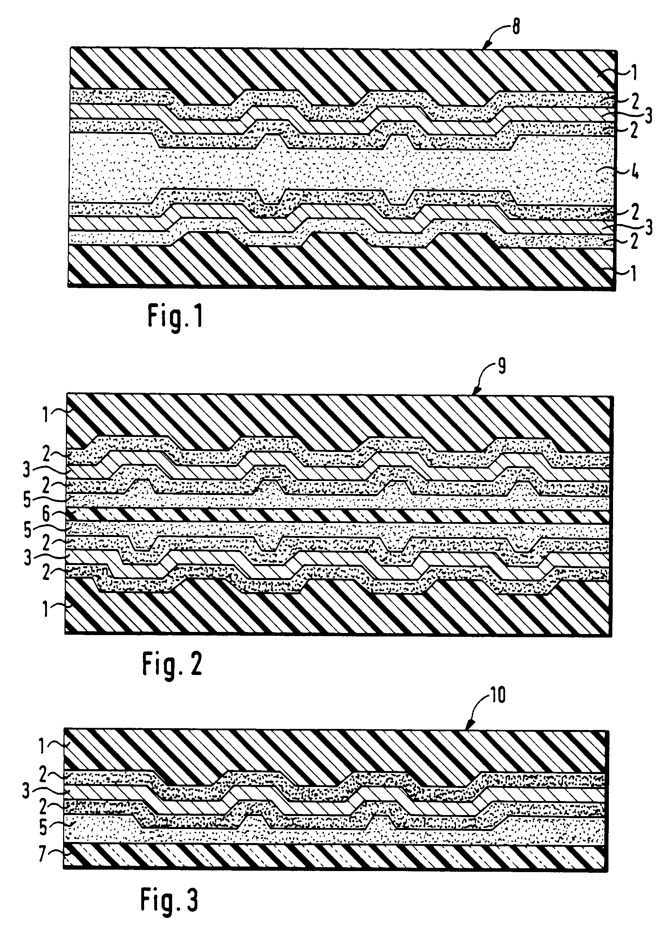

In Figur 1 ist schematisch im Schnitt ein Informations-aufzeichnungselement 8 dargestellt, das aus je zwei Substraten 1, 1 besteht, auf denen jeweils eine magnetooptische Aufzeichnungsschicht 3 aufgebracht ist, die beidseitig von dielektrischen Schichten 2, 2 umschlossen wird. Das jeweilige Substrat 1 dient als Trägerplatte für die von beiden Seiten mit den dielektrischen Schichten 2, 2 umschlossene magnetooptische Aufzeichnungsschicht 3. Bei den dielektrischen Schichten 2, 2 handelt es sich beispielsweise um Siliziumnitrid- oder Aluminiumnitridschichten, die einen Korrosionsschutz für die magnetooptische Aufzeichnungsschicht 3 bilden. Die Substrate 1, 1 weisen auf ihren Oberflächen Rillenstrukturen auf, die in Fig. 1 gegenüber der praktischen Ausführungsform deutlich vergrößert gezeigt sind. Die beiden Verbunde aus Substrat 1 - dielektrischer Schicht 2 - Aufzeichnungsschicht 3 - dielektrischer Schicht 2 liegen einander so gegenüber, daß die Aufzeichnungsschichten 3, 3 innen liegen, und werden durch eine elastische Klebschaumschicht 4 vollflächig miteinander hermetisch verklebt. Zwischen den beiden Verbunden sind keine Luftspalte vorhanden.

Die elastische Klebschaumschicht 4 weist eine Temperaturbeständigkeit von -40°C bis +150°C auf und ist sowohl gegen Weichmacher als auch Lösungsmittel beständig. Der Wärmeeindringkoeffizient b der Klebschaumschicht ist kleiner als der Wärmeeindringkoeffizient von dichten Klebstoffschichten, die beispielsweise aus schnellhärtenden Klebstoffen oder durch Feuchtigkeitsaufnahme härtenden Polyurethanklebstoffen bestehen. Im allgemeinen beträgt der Wärmeeindringkoeffizient der Klebschaumschicht weniger als 450 $W \cdot s^{1/2}/K \cdot m^2$. Beispielsweise besteht die Klebschaumschicht aus einem geschlossenzelligen Klebstoff-Kern mit selbstklebenden Oberflächen, und enthält insbesondere einen Acrylat-Copolymer-Klebstoff. Zu einem spezifischen Beispiel für eine derartige Klebschaumschicht zählt das Produkt "Acrylic Foam" der Fa. Minnesota Mining and Manufacturing Co., 3M, USA.

Für das Substrat 1 sind verschiedene Materialien geeignet, dazu gehören verschiedene Glassorten und insbesondere Kunststoffe, wie Polymethylmethacrylat, Polyvinylchlorid, Cellulosetriacetat, Polycarbonat, Polyolefine, Polystyrol und Epoxidharze sowie Mischungen der genannten Kunststoffe, wobei diese Aufzählung keineswegs vollständig ist.

Wie schon erwähnt, sind geeignete Materialien für die dielektrischen Schichten, vor allem Aluminiumnitrid AIN und Siliziumnitrid $Si_3N_4$ und daneben desweiteren Siliziumoxid $SiO_2$, Zinksulfid ZnS und Indiumzinnoxid.

Die magnetooptische Aufzeichnungsschicht 3 besteht aus bekannten Materialien, bei denen es sich im allgemeinen um amorphe Legierungen aus Seltenen Erden und Übergangsmetallen handelt, die vertikal zur Schichtoberfläche eine Achse einer leichten Magnetisierbarkeit aufweisen. Bekannte Materialien sind Legierungen aus TbFe, GdFe, GdCo, TbFeCo, GdTbFeCo, NdDyFeCo oder dergleichen. Die einzelnen Schichten werden auf das Substrat in bekannter Weise durch Zerstäuben aufgebracht, so daß ein verbundmäßiger Aufbau aus Substrat 1 - dielektrischer Schicht 2 - Aufzeichnungsschicht 3 - dielektrischer Schicht 2 entsteht, wobei die magnetooptische Aufzeichnungsschicht 3 durch die beiden dielektrischen Schichten 2, 2 sandwichartig umschlossen ist.

In Figur 2 ist eine weitere Ausführungsform eines Informationsaufzeichnungselements 9 dargestellt, das ebenso wie das erste Ausführungsbeispiel nach Figur 1 symmetrisch aus zwei Verbunden aufgebaut ist. Zwischen den zwei einander gegenüberliegenden Verbunden aus Substrat 1 - dielektrischer Schicht 2 - Aufzeichnungsschicht 3 - dielektrischer Schicht 2 ist eine Trägerschicht 6 angeordnet, die beispielsweise aus dem gleichen Material wie die Substrate 1 bestehen kann. Jeder Verbund ist mittels einer elastischen Klebschaumschicht 5 vollflächig, unter Ausschluß von Luftspalten, hermetisch mit der Trägerschicht 6 verklebt. Die beiden Klebschaumschichten 5 werden vorab beidseitig auf der Trägerschicht 6 aufgebracht und anschließend beidseitig die Verbunde auf die Klebschaumschicht 5 aufgelegt und diese Struktur zu dem Informationsaufzeichnungselement 9 verpreßt.

In Figur 3 ist ein einseitig beschreibbares Informationsaufzeichnungselement 10 im Schnitt dargestellt. Dieses Element besteht aus einem Substrat 1, der sandwichartig durch die dielektrischen Schichten 2, 2 umschlossenen magnetooptischen Aufzeichnungsschicht 3, der Klebschaumschicht 5 und einer Kunststoffschicht 7 als rückseitige Abdeckung des Informationsaufzeichnungselements 10. Die Abdeckung 7 besteht beispielsweise aus dem gleichen Material wie das Substrat 1 oder aus dem gleichen Material wie die Trägerschicht 6 im zweiten Ausführungsbeispiel der Erfindung nach Figur 2.

Untersuchungen über die notwendige Leistung von Schreiblasern für die Datenaufzeichnung auf Aufzeichnungselementen mit magnetooptischen Aufzeichnungsschichten zeigen, daß durch Aufbringen von dichten Klebstoffschichten zum Verkleben der Platten, welche die Aufzeichnungsschichten enthalten, die Leistung der Schreiblaser für eine kontrastreiche Signalaufzeichnung erheblich erhöht werden muß, im Vergleich zu nicht miteinander verklebten Verbunden, wie zum Beispiel magnetooptische Platten mit einer Luft-Sandwich-Struktur, die mit einem Luftspalt zwischen der auf einem Substrat aufgebrachten Aufzeichnungsschicht und einer äußeren Abdeckschicht zusammengefügt sind, wobei am inneren und äußeren Umfang dieser Elemente jeweils Abstandshalter vorgesehen sind (EP-A1 - 0 235 812). Dies kann dazu führen, daß die Laserenergie, die im Schreiblaser zur Verfügung steht, für eine einwandfreie Aufzeichnung nicht mehr ausreicht. Dieser Empfindlichkeitsabfall eines mit dichten Klebstoffschichten verklebten Informationsaufzeichnungselements, d.h., die Notwendigkeit, die Leistung des Schreiblasers im Vergleich zu einem Aufzeichnungselement, dessen Schichten nicht miteinander verklebt sind, erhöhen zu müssen, deutet darauf hin, daß die auf die magnetooptische Aufzeichnungsschicht abgestrahlte Schreiblaserleistung nur teilweise über diese metallische Aufzeichnungsschicht abgeleitet wird, während der übrige Energieanteil einen anderen Weg nehmen muß. Dies ist insofern überraschend, als die magnetooptischen Aufzeichnungsschichten zum Zweck des Korrosionsschutzes auf beiden Seiten mit transparenten, glasartigen Siliziumnitridschichten geschützt sind, denen bisher immer eine ausreichende thermische Isolationswirkung zugeschrieben wurde, die ein Entweichen der eingestrahlten Schreiblaserenergie dem Grunde nach verhindern sollte.

Die Unterschiede der Wärmeleitfähigkeiten von Luft mit einem $\lambda$ = 0,024 W/K•m und Kunststoff mit einem $\lambda$ = 0,2 W/K•m sind im Vergleich zur Wärmeleitfähigkeit einer Metallschicht mit einem $\lambda$ etwa gleich 20 W/K•m, die erhitzt wird, so gering, daß der Empfindlichkeitsabfall damit allein nicht erklärt werden kann. Auch die etwa zehnmal größere Grenzfläche des durch den Schreiblaserstrahl erhitzten Volumens der magnetooptischen Aufzeichnungsschicht zu Kunststoff im Vergleich zu Metall, erklärt den Empfindlichkeitsabfall nicht ausreichend. Die hohe Wärmeleitfähigkeit einer Metallschicht legt an und für sich eine radiale Wärmeableitung innerhalb der Metallschicht aus dem Schreibfleck in die angrenzenden Metallschichtbereiche nahe.

Eine mögliche Erklärung für den Empfindlichkeitsabfall ergibt sich aus theoretischen Berechnungen über die Wärmeableitung beim Schreibvorgang mit einem Laser in einer Metallschicht, beispielsweise einer Tellurschicht, die auf einem Kunststoffsubstrat aufgebracht ist. Diese Berechnungen zeigen, daß ein Großteil der Wärme sehr schnell in das Kunststoffsubstrat abgeleitet wird und keineswegs in der Metallschicht weitergeleitet wird, obgleich Metall eine wesentlich höhere Wärmeleit fähigkeit als Kunststoff besitzt (Applied Optics, Vol. 23, Nr. 22, 15.11.1984, S. 3965 bis 3971, insbesondere S. 3969, rechte Spalte, "Latent heat effects of pulsed laser beam induced temperature profiles in optical recording thin films", Verfasser S.Y. Suh und T.L. Anderson). Diese Berechnungen und experimentelle Untersuchungen zeigen, daß vor allem der Wärmeeindringkoeffizient $b = (\lambda \cdot \rho \cdot c_p)^{1/2}$ in W • s$^{1/2}$ / K • m$^2$ einer Kunststoff- bzw. Klebstoffschicht betrachtet werden muß. Der Wärmeeindringkoeffizient gibt an, wie groß die in einen Körper in einer bestimmten Zeit nach plötzlicher Erhöhung der Oberflächentemperatur eingedrungene Wärmemenge ist ("Wärmeleitung", Verfasser U. Grigull und H. Sandner, Springer-Verlag, Berlin, Heidelberg, New York, 1979, S. 15 ff). In der Beziehung für den Wärmeeindringkoeffizienten b ist $\lambda$ die Wärmeleitfähigkeit in W/K • m, $c_p$ die spezifische Wärmekapazität in J/kg • K und $\rho$ die spezifische Dichte der Schicht in kg/m$^3$. Die

Werte für den Wärmeeindringkoeffizienten b betragen für Luft etwa 6, für Kunststoff 600 und für Metall ca. 10.000, jeweils in SI-Einheiten $W \cdot s^{1/2} / K \cdot m^2$.

Das Verhältnis der Wärmeleitfähigkeiten von Metall zu Kunststoff, mit den weiter oben angegebenen λ-Werten, ergibt 100, während das Verhältnis der Wärmeeindringkoeffizienten b von Metall zu Kunststoff einen Wert von rund 17 liefert. Diese Zahlen zeigen, daß die in die Klebstoffschicht, die im allgemeinen eine organische Schicht bzw. Kunststoffschicht darstellt, eindringende Wärmemenge einen größeren Anteil an der Wärmeableitung hat als die in Radialrichtung in der Aufzeichnungsschicht weitertransportierte Wärmemenge. Wird dabei noch berücksichtigt, daß die Dicke der Klebstoffschicht wesentlich größer als die Dicke der magnetooptischen Aufzeichnungsschicht ist, so verstärkt sich der Effekt des Eindringens der Wärmemenge in die Klebstoffschicht. Die voranstehend aufgezeigten Unterschiede in den Wärmeeindringkoeffizienten sind ausreichend groß, um die auftretende Empfindlichkeitsminderung durch Aufbringen einer dichten Klebstoffschicht auf einen Verbund, der u.a. auch die magnetooptische Aufzeichnungsschicht enthält, zu erklären.

Zu einigen der nachfolgenden Ausführungsbeispiele der Erfindung wurden sogenannte Empfindlichkeitskurven aufgezeichnet, die nachstehend noch näher erläutert werden.

### Beispiel 1

Auf einem vorbereiteten Polycarbonat-Substrat 1 wurden der Reihe nach eine dielektrische Schicht 2 aus $Si_3N_4$, eine magnetooptische Aufzeichnungsschicht 3 aus GdTbFe und eine dielektrische Schicht 2 aus $Si_3N_4$ aufgesputtert.

Auf die freie dielektrische Schicht 2 wurde eine selbstklebende Klebschaumschicht 5 in Gestalt eines Schaumklebstoffbandes 'Scotch Acrylic Foam Y 4930' der Fa.

Minnesota Mining and Manufacturing Co., 3M, USA, auflaminiert. Nach Abziehen der Schutzfolie des Schaumklebstoffbandes wurde eine Kunststoffschicht 7 aus einem Polycarbonatmaterial als Schutzabdek-kung aufgebracht (vgl. Fig. 3). Das so erhaltene Informationsaufzeichnungselement 10 wurde in ein Aufzeichnungs-Wiedergabegerät eingelegt und ein Schreib-Lese-Test durchgeführt. Bei diesem Test wird ein symmetrisches Rechteckaufzeichnungssignal mit konstanter Frequenz und gleichbleibender Form, jedoch unterschiedlicher Amplitude, entsprechend einer unterschiedlichen Schreiblaserleistung, aufgezeichnet. Dieses Aufzeichnungssignal wird mit einer konstanten Leseleistung von 1,4 mW, bei einer Frequenz von 500 kHz, einer konstanten Lineargeschwindigkeit des Informationsaufzeichnungselements von 4 m/s und einer gleichbleibenden Position des Leselasers in einem Abstand von 45,5 mm von dem Mittelpunkt des Informationsaufzeichnungselements ausgelesen. Das erhaltene Lesesignal wird in einem Spektrumanalysator weiterverarbeitet und mit einem Rechner ausgewertet.

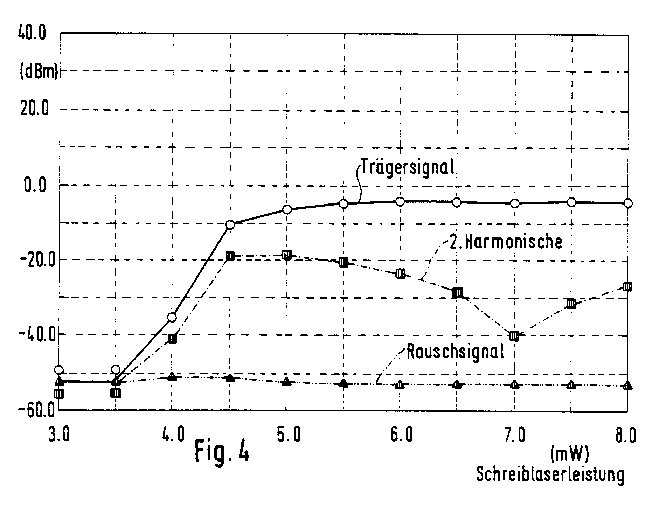

In Fig. 4 sind die aus dem Lesesignal abgeleiteten Kurven, insbesondere die sogenannte Empfindlichkeitskurve, des Informationsaufzeichnungselements 10 dargestellt. Auf der Abszisse des Schaubildes nach Fig. 4 sind die Schreiblaserleistung in mW und auf der Ordinate die Amplituden des Trägersignals, der Zweiten Harmonischen des Trägersignals und des Rauschens in dBm angegeben. Der Trägersignalverlauf über der Schreiblaserleistung zeigt die Amplitude des wiedergegebenen Rechteck-Aufzeichnungssignals, und die Frequenz dieses Trägersignals entspricht der Frequenz des Schreibsignals. Im Spektrumanalysator erfolgt eine Zerlegung des rechteckförmigen Trägersignals in ein Oberwellenspektrum, in dem insbesondere die Amplitude der, im Idealfall eines Rechteckträgersignals nicht vorhandenen, zweiten harmonischen Schwingung dargestellt wird. Der Kurvenverlauf der Zweiten Harmonischen des Trägersignals über der Schreiblaserleistung zeigt ein Minimum bei einer Schreiblaserleistung von 7,0 mW. Dieses Minimum im Kurvenverlauf der Zweiten Harmonischen des Trägersignals gibt die Schreibleistung an, bei der die geringste Verzerrung in der Aufzeichnung der Information auftritt und legt den Arbeitspunkt fest, bei dem die Aufzeichnung vorteilhafterweise erfolgen soll, um eine weitgehend unverzerrte Aufzeichnung der Information zu erhalten.

Die Schreibleistung von 7,0 mW für die Informationsaufzeichnung auf dem Informationsaufzeichnungselement 10 ist zwar höher als bei einer nicht verklebten Platte, liegt jedoch noch innerhalb des Arbeitsbereichs von 7 bis 8 mW des Schreiblasers und ist auch niedriger als bei nachfolgend noch angeführten Vergleichsinformationsaufzeichnungselementen.

### Vergleichsbeispiel

Ein wie im Beispiel 1 aufgebautes Informationsaufzeichnungselement wurde direkt mit einer Deckschicht aus Polyurethan-Klebstoff vom Einkomponenten-Reaktiv-Typ, Icema R 145/46, der Fa. H.B. Fuller GmbH, Deutschland, beschichtet.

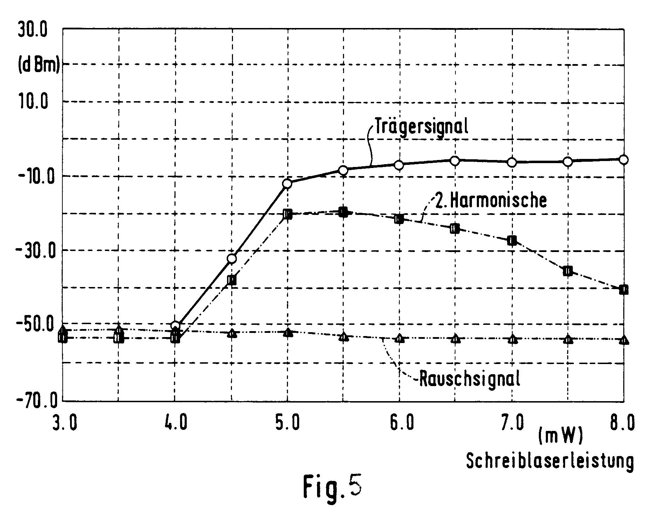

Die Kurvenverläufe des Trägersignals, der zweiten harmonischen Schwingung des Trägersignals sowie des Rauschsignals sind in Figur 5 dargestellt.

Unter den gleichen Aufzeichnungs- und Lesebedingungen wie im Beispiel 1 ist im Arbeitsbereich bis 8 mW Schreiblaserleistung ein Minimum der Zweiten Harmonischen des Trägersignals nicht zu erreichen. Das Informationsaufzeichnungselement ist für die praktische Anwendung zu unempfindlich und daher nicht verwendbar.

In der nachstehenden Tabelle sind Mittelwerte der Versuchsergebnisse aus unterschiedlichen Beschichtungen von Informationsaufzeichnungselementen zusammengestellt. Hierzu wurden jeweils Informationsaufzeichnungselemente, die mit dem gleichen Klebstoff laminiert bzw. beschichtet wurden und gleichen Strukturaufbau hatten, ausgewertet und die erhaltenen Kurvenverläufe bzw. Daten gemittelt.

Die Trägersignal-zu-Rausch-Verhältnisse wurden bei den in den Beispielen angegebenen optimalen Schreibleistungen gemessen. Diese Verhältnisse sind nicht optimiert, da für die Klebversuche nur die relativen Änderungen relevant sind. Ein Abfall der Trägersignal-/Rauschverhältnisse von etwa 1 dB zwischen unverklebtem und verklebtem Zustand des Informationsaufzeichnungselements ist dabei als akzeptabel anzusehen und liefert brauchbare Aufzeichnungselemente. Die Versuche zeigten deutlich, daß Kleber bzw. Lacke, die flüssig aufgetragen werden, die Informationsaufzeichnungselemente für die Aufzeichnung zu unempfindlich machen und keine optimalen Signalcharakteristika ergeben, da der Abfall des Trägersignal-/Rauschverhältnisses größer als 1 dB ist.

TABELLE

| Mittelwerte der Versuchsergebnisse aus den Beschichtungen von Informationsaufzeichnungselementen | | |
| --- | --- | --- |
| Beschichtung | Schreibleistung nach dem Beschichten (mW) | Trägersignal-/Rauschverhältnis (dB) |
| | | vorher / nachher |
| Cellulosenitrat-Schutzschicht, ERCO RN 2162/011 | 8,0 | 50,1 / 47,6 |
| Acryl-Schaum Scotch Y 4930 | 6,5 | 49,9 / 48,9 |
| PUR-Kleber (Polyurethan-Reaktivkleber ICEMA R 145/46 | 7,8 | 50,5 / 48,1 |
| Klebfolie (Polyester-Klebfolie) Scotch cal | 7,2 | 49,6 / 48,7 |

**Patentansprüche**

1. Informationsaufzeichnungselement aus zumindest einem Substrat, auf dem eine magnetooptische Aufzeichnungsschicht aufgebracht ist, die beidseitig von dielektrischen Schichten umschlossen ist, dadurch gekennzeichnet, daß der Verbund aus Substrat (1) - dielektrischer Schicht (2) - Aufzeichnungsschicht (3) - dielektrischer Schicht (2) mittels einer vollflächig aufgetragenen elastischen Klebeschaumschicht (5), die eine Temperaturbeständigkeit von -40°C bis +150°C besitzt und gegen Weichmacher sowie Lösungsmittel beständig ist, hermetisch mit einer Kunststoffschicht (7) verklebt ist.

2. Informationsaufzeichnungselement nach Anspruch 1, dadurch gekennzeichnet, daß zwei Substrate (1; 1) vorhanden sind, auf denen jeweils eine magnetooptische Aufzeichnungsschicht (3), beidseitig von dielektrischen Schichten (2; 2) umschlossen, aufgebracht ist, und daß die beiden einander gegenüberliegenden Verbunde aus Substrat (1) - dielektrischer Schicht (2) - Aufzeichnungsschicht (3) - dielektrischer Schicht (2) durch eine elastische Klebeschaumschicht (4) vollflächig miteinander, unter Ausschluß von Luftspalten, hermetisch verklebt sind.

3. Informationsaufzeichnungselement nach Anspruch 1, dadurch gekennzeichnet, daß zwischen zwei einander genüberliegenden Verbunden aus Substrat (1) - dielektrischer Schicht (2) - Aufzeichnungsschicht (3) - dielektrischer Schicht (2) eine Trägerschicht (6) angeordnet ist und daß jeder Verbund mittels einer elastischen Klebeschaumschicht (5) vollflächig, unter Ausschluß von Luftspalten, hermetisch mit der Trägerschicht (6) verklebt ist.

4. Informationsaufzeichnungselement nach Anspruch 1, dadurch gekennzeichnet, daß der Wärmeeindringkoeffizient b der Klebeschaumschicht (4; 5) kleiner als der Wärmeeindringkoeffizient von schnell härtenden Klebstoffen und durch Feuchtigkeitsaufnahme härtenden Polyurethanklebstoffen ist und weniger als 450 $W \cdot s^{1/2}/K \cdot m^2$ beträgt.

5. Informationsaufzeichnungselement nach Anspruch 4, dadurch gekennzeichnet, daß die Klebeschaumschicht (4; 5) aus einem geschlossenzelligen Klebstoff-Kern mit selbstklebenden Oberflächen besteht.

6. Informationsaufzeichnungselement nach Anspruch 5, dadurch gekennzeichnet, daß der Klebstoff-Kern einen Acrylat-Copolymer-Klebstoff enthält.

## Claims

1. An information recording element consisting of at least one substrate, on which a magnetooptical recording layer which is enclosed on both sides by dielectric layers is applied, wherein the composite consisting of substrate (1) - dielectric layer (2) - recording layer (3) - dielectric layer (2) is hermetically bonded to a plastic layer (7) by means of a flexible adhesive foam layer (5) which is applied over the entire surface, is thermally stable from -40°C to +150°C and is resistant to plasticizers and solvents.

2. An information recording element as claimed in claim 1, wherein two substrates (1; 1) are present, on each of which a magnetooptical recording layer (3), enclosed on both sides by dielectric layers (2; 2), is applied, and the two opposite composites consisting of substrate (1) - dielectric layer (2) - recording layer (3) - dielectric layer (2) are hermetically bonded to one another over the entire surface, with exclusion of air gaps by means of a flexible adhesive foam layer (4).

3. An information recording element as claimed in clarm 1, wherein a support layer (6) is arranged between two opposite composites consisting of substrate (1) - dielectric layer (2) - recording layer (3) - dielectric layer (2), and each composite is hermetically bonded to the support layer (6), over the entire surface, by means of a flexible adhesive foam layer (5), with exclusion of air gaps.

4. An information recording element as claimed in claim 1, wherein the heat penetration coefficient b of the adhesive foam layer (4; 5) is smaller than the heat penetration coefficient of rapidly curing adhesives and of polyurethane adhesives which cure by moisture absorption, and is less than 450 $W.s^{1/2}/K.m^2$.

5. An information recording element as claimed in clarm 4, wherein the adhesive foam layer (4; 5) consists of a closed-cell adhesive core with self-adhesive surfaces.

6. An information recording element as claimed in claim 5, wherein the adhesive core contains an acrylate copolymer adhesive.

## Revendications

1. Élément d'enregistrement d'informations constitué par au moins un substrat, sur lequel est déposée une couche d'enregistrement magnéto-optique, qui est entourée sur ses deux faces par des couches diélectriques, caractérisé en ce que l'ensemble composite formé par le substrat (1) - la couche diélectrique (2) - la couche d'enregistrement (3) - la couche diélectrique (2) est collé de façon hermétique sur une couche de matière plastique (7) au moyen d'une couche d'adhésif élastique à l'état de mousse (5), qui est déposée sur toute la surface, est thermiquement stable de -40°C à +150°C et résistante aux plastifiants et aux solvants.

2. Élément d'enregistrement d'informations selon la revendication 1, caractérisé en ce qu'il est prévu deux substrats (1; 1), sur lesquels est déposée respectivement une couche d'enregistrement magnéto-optique (3), entouree sur ses deux faces par des couches diélectriques (2; 2) et que les deux ensembles composites situés réciproquement en vis-à-vis et constitués par un substrat (1) - une couche diélectrique (2) - une couche d'enregistrement (3) - une couche diélectrique (2) sont collés hermétiquement l'un à l'autre sur toute leur surface, à l'exclusion de fentes d'air, au moyen d'une couche d'adhésif élastique à l'état de mousse (4).

3.  Élément d'enregistrement d'informations selon la revendication 1, caractérisé en ce qu'une couche de support (6) est disposée entre deux ensembles composites situés réciproquement en vis-à-vis et comprenant un substrat (1) - une couche diélectrique (2) - une couche d'enregistrement (3) - une couche diélectrique (2) et que chaque ensemble composite est collé hermétiquement sur la couche de support (6) sur toute sa surface, à l'exclusion de fentes d'air, au moyen d'une couche d'adhésif élastique à l'état de mousse (5).

4.  Élément d'enregistrement d'informations selon la revendication 1, caractérisé en ce que le coefficient de pénétration de chaleur b de la couche d'adhésif (4; 5) est inférieur au coefficient de pénétration de la chaleur d'adhésifs à durcissement rapide et d'adhésifs à base de polyuréthane, qui durcissent sous l'effet d'une absorption d'humidité, et est inférieur à 450 W.s$^{\frac{1}{2}}$/K.m$^2$.

5.  Élément d'enregistrement d'informations selon la revendication 4, caractérisé en ce que la couche d'adhésif à l'état de mousse (4; 5) est constituée par un noyau adhésif à cellules fermées, possédant des surfaces autoadhésives.

6.  Élément d'enregistrement d'informations selon la revendication 5, caractérisé en ce que le noyau adhésif contient un adhésif formé d'un copolymère d'acrylate.

8

Fig.1

Fig. 2

Fig. 3

**Fig. 4**

Fig.5